# EUROPÄISCHE PATENTSCHRIFT

(11) **EP 1 334 016 B1**
(45) Veröffentlichungstag und Bekanntmachung des Hinweises auf die Patenterteilung: **15.10.2008**
(21) Anmeldenummer: 01996485.7
(22) Anmeldetag: 14.11.2001
(51) Int. Cl.: B60T 1/087, B60T 10/02, F16H 59/54, B60H 1/03, F16H 61/02

(54) **VERFAHREN ZUR ERHÖHUNG DER BREMSWIRKUNG**
METHOD FOR INCREASING BRAKE EFFICIENCY
PROC D D'AUGMENTATION DE L'EFFET DE FREINAGE

(30) Priorität: 17.11.2000 DE 10057089
(43) Veröffentlichungstag der Anmeldung: 13.08.2003
(73) Patentinhaber: ZF FRIEDRICHSHAFEN Aktiengesellschaft, 88038 Friedrichshafen (DE)
(72) Erfinder: REISCH, Bernhard, 88316 Isny (DE); SCHMIDTNER, Peter, 88131 Lindau (DE)
(86) Internationale Anmeldenummer: PCT/EP2001/013176
(87) Internationale Veröffentlichungsnummer: WO 2002/040330

(56) Entgegenhaltungen:
- DE-A- 4 446 085
- DE-A- 4 446 288

## Beschreibung

Die vorliegende Erfindung betrifft ein Verfahren zur Erhöhung der Bremswirkung für ein Fahrzeug mit einem hydrodynamischen Retarder gemäß dem.Oberbegeriff des Patentanspruchs 1.

Retarder dienen als nahezu verschleissfreie Dauerbremsen, insbesondere für Nutzfahrzeuge und Bahnantriebe, da sie den Vorzug aufweisen, die abzubremsende Energie ohne Verschleiss über längere Zeiträume in Wärme umzuwandeln.

Bei hydrodynamischen Retardern wird die Strömungsenergie einer Flüssigkeit zum Bremsen benutzt, wobei das physikalische Wirkprinzip dem einer hydrodynamischen Kupplung mit feststehender Turbine entspricht. Demnach weist ein Retarder einer sich im Leistungsfluß befindlichen Rotor und einen mit dem Retardergehäuse fest verbundenen Stator auf. Beim Betätigen des Retarders wird eine der gewünschten Bremsleistung entsprechende Ölmenge in den Schaufelraum eingebracht, wobei der drehende Rotor das Öl mitnimmt, das sich am Stator abstützt, wodurch eine Bremswirkung auf die Rotorwelle erzeugt wird.

Folglich können Retarder bei kleiner Drehzahl nur ein geringes Bremsmoment erzeugen.

Unter normalen Fahrbedingungen liegen die Motordrehzahlen auf einem relativ niedrigen Niveau, nämlich im verbrauchsgünstigen Drehzahlbereich. Bei Retarderbremsungen ist jedoch eine höhere Kühlmittelumlaufmenge und somit eine höhere Motordrehzahl erwünscht bzw. zur optimalen Nutzung erforderlich.

In der DE 44 46 085 A1 wird ein Verfahren vorgeschlagen, in welchem primär festgelegte Herunter- und Heraufschaltpunkte auf wesentlich höher liegende Schaltpunkte automatisch angehoben werden. Somit wird ein unnötiges Herunterschalten vermieden, wenn die anstehende Motordrehzahl ausreicht, die aufgrund der vom Retarder entwickelten Bremsleistung entstehende Wärme abzuleiten.

Der vorliegenden Erfindung liegt daher die Aufgabe zugrunde, ein Verfahren anzugeben, welches es ermöglicht, auch bei ursprünglich niedrigen Drehzahlen, eine ausreichende gewünschte Retarderbremsleistung zu erzielen.

Diese Aufgabe wird durch die Merkmale des Patentanspruchs 1 gelöst. Weitere Ausgestaltungen gehen aus den Unteransprüchen hervor.

Demnach wird vorgeschlagen, durch vom Retarder ausgelöste Rückschaltanforderungen die Drehzahl zu erhöhen, derart, dass durch die aufgrund der höheren Motordrehzahl erhöhte Kühlmittelumlaufmenge die notwendige Retarderbremsleistung erzielt wird. Durch die Erhöhung der Motordrehzahl und aufgrund der höheren Gangübersetzung erhöht sich zusätzlich die Gesamtbremsleistung des Fahrzeugs.

Erfindungsgemäß wird aus Komfortgründen nur dann eine Rückschaltung ausgeführt, wenn dies aufgrund der aktuellen Retarderbremsleistung erforderlich wird.

Die Gesamtsituation wird vorausschauend beurteilt und, falls erforderlich, wird eine Rückschaltanforderung ausgelöst.

Die Bestimmung, ob und wann eine Rückschaltung zur Steigerung der aktuellen Leistungsfähigkeit des Retarderbremssystems notwendig ist, werden mehrere, sich gegenseitig beeinflussende Kenngrößen berücksichtigt.

Ein wichtiges Kriterium stellt die aktuelle Bremswirkung des Retarders dar, die aus dem aktuellen Bremsmoment, die aktuelle Bremsleistung, den Retarder-Einlaß- oder Auslaßdruck oder dem Steuerstrom ermittelbar ist.

Zudem wird als weiteres Kriterium der aktuelle Fahrzustand aus den aktuellen Drehzahlen (z.B. Getriebeabtriebsdrehzahl, Raddrehzahlen, Motordrehzahlen, Kupplungsdrehzahl), der Fahrzeuggeschwindigkeit, den Drehzahl- oder Geschwindigkeitsänderungen, der Topographie, oder der Fahrzeugmasse in Verbindung mit Kenntnis der Topographie ermittelt.

Erfindungsgemäß wird zur Bestimmung der Notwendigkeit einer Rückschaltung auch die Leistungsfähigkeit des Fahrzeugkühlsystems berücksichtigt, die sich beispielsweise aus der Temperatur im Kühlsystem, deren Änderung als Funktion der Zeit, der Motordrehzahl, dem Druck im Kühlkreislauf, der Gangstellung, dem Kupplungszustand oder der Wasserpumpendrehzahl ergibt.

Gemäß der Erfindung werden die oben genannten unterschiedlichen Kenngrößen durch eine logische Verknüpfung oder unter Zuhilfenahme eines Fuzzy Regelwerkes berücksichtigt, um die Notwendigkeit einer Rückschaltanforderung zu erkennen und diese auszulösen.

Ein wesentlicher Vorteil der Verwendung eines Fuzzy Regelwerkes besteht darin, dass die unterschiedlichen Größen entsprechend gewichtet in das Ergebnis eingehen.

Die Rückschaltanforderung wird dem Fahrer akustisch, optisch oder haptisch mitgeteilt oder an ein automatisiertes oder automatisches Schaltsystem zur Auslösung einer Schaltung weitergeleitet.

Im Rahmen weiterer Varianten des erfindungsgemäßen Verfahrens wird die Notwendigkeit einer Rückschaltanforderung anhand der Überschreitung bzw. Unterschreitung von Schwellwerten erkannt. Geeignete Schwellwerte können Schwellwerte für die Kühlmitteltemperatur bzw. den Gradienten der Kühlmitteltemperatur, für die Motordrehzahl bzw. den Gradienten der Motordrehzahl oder für die Abtriebsdrehzahl bzw. deren Gradienten sein.

Desweiteren wird im Rahmen einer weiteren Ausführungsform aus einem Modell des Kühlsystems die zukünftige Entwicklung der Kühlmitteltemperatur und optional weiterer Größen bestimmt und hierauf basierend eine Rückschaltung angefordert.

Ebenfalls ist es möglich, unter Bremsomatbedingungen eine Rückschaltanforderung auszulösen, sofern der Retarder im aktuellen Betriebszustand die erforderliche Bremsleistung bzw. Bremsmoment zur Verfügung stellen kann.

## Patentansprüche

1. Verfahren zur Erhöhung der Bremswirkung für ein Fahrzeug mit einem hydrodynamischen Retarder, bei dem die Motordrehzahl durch Rückschaltanforderungen erhöht wird, derart, dass durch die aufgrund der höheren Motordrehzahl erhöhe Kühlmittelumlaufmenge die notwendige Retarderbremsleistung zur Verfügung gestellt wird, **dadurch gekennzeichnet, dass** zur Bestimmung der Notwendigkeit einer Rückschaltanforderung die aktuelle Bremswirkung des Retarders, der aktuelle Fahrzustand und die Leistungsfähigkeit des Fahrzeugkühlsystems berücksichtigt werden und die aktuelle Bremswirkung aus dem aktuellen Bremsmoment, der aktuellen Bremsleistung, dem Retarder-Einlaß- oder Auslaßdruck oder dem Steuerstrom ermittelt wird, dass der aktuelle Fahrzustand aus den aktuellen Drehzahlen z. B. Getriebeabtriebsdrehzahl, Raddrehzahlen, Motordrehzahlen, Kupplungsdrehzahl, der Fahrzeuggeschwindigkeit, den Drehzahl- oder Geschwindigkeitsänderungen, der Topographie, oder der Fahrzeugmasse in Verbindung mit der Topographie ermittelt wird und dass die Leistungsfähigkeit des Fahrzeugkühlsystems aus der Temperatur im Kühlsystem, der Änderung der Temperatur als Funktion der Zeit, der Motordrehzahl, dem Druck im Kühlkreislauf, der Gangstellung, dem Kupplungszustand oder der Wasserpumpendrehzahl ermittelt wird.

2. Verfahren nach Anspruch 1, **dadurch gekennzeichnet, dass** die aktuelle Bremswirkung des Retarders, der aktuelle Fahrzustand und die die Leistungsfähigkeit des Fahrzeugkühlsystems durch eine logische Verknüpfung oder mittels eines Fuzzy-Regelwerkes berücksichtigt werden, um die Notwendigkeit einer Rückschaltanforderung zu erkennen und diese auszulösen.

3. Verfahren nach einem der Anspruche 1 oder 2, **dadurch gekennzeichnet, dass** die Rückschaltanforderung dem Fahrer akustisch, optisch oder haptisch mitgeteilt wird.

4. Verfahren nach einem der Ansprüche 1 bis 3, **dadurch gekennzeichnet, dass** die Rückschaltanforderung an ein automatisiertes oder automatisches Schaltsystem zur Auslösung einer Schaltung weitergeleitet wird.

## Claims

1. Method for increasing the braking effect of a vehicle with a hydrodynamic retarder, with the engine speed being increased by means of downshift requests in such a manner that the necessary retarder braking power is provided on account of the raised quantity of circulating coolant, as a result of the higher engine speed, **characterized in that** the current retarder braking effect, the current driving condition and the capacity of the vehicle's cooling system are taken into account for determination of the necessity of a downshift request; that the current braking effect is determined on the basis of the current braking torque, the current braking power, the retarder inlet or outlet pressure, or the control current; that the current driving condition is determined on the basis of the current speeds, such as the transmission output speed, wheel speeds, engine speeds, clutch speed of vehicle speed, the rpm or speed changes, the topography, or the vehicle mass in conjunction with the topography; and that the capacity of the vehicle's cooling system is determined on the basis of the temperature in the cooling system, the change in temperature as a function of time, the engine speed, the pressure in the cooling circuit, the gear position, the clutch condition, or the speed of the water pump.

2. Method according to claim 1, **characterized in that** the current braking effect of the retarder, the current driving condition and the capacity of the vehicle's cooling system are taken into account through logic operation or by means of fuzzy logic for detection of the necessity of a downshift request and for triggering such a downshift.

3. Method according to one of the claims 1 or 2, **characterized in that** the driver is acoustically, optically or haptically informed of the downshift request.

4. Method according to one of the claims 1 thru 3, **characterized in that** the downshift request is transmitted to an automated or automatic shifting system for activation of a shift.

## Revendications

1. Procédé d'augmentation de l'effet de freinage d'un véhicule doté d'un ralentisseur hydrodynamique, dans lequel le régime moteur est augmenté par des requêtes de rétrogradage, et cela de façon à ce que, par un débit du liquide de refroidissement augmenté en raison du régime moteur plus élevé, est mise à disposition la puissance de freinage nécessaire du ralentisseur, **caractérisé en ce que** pour la détermination de la nécessité d'une requête de rétrogradage sont pris en considération l'effet de freinage actuel du ralentisseur, l'état de conduite actuel et la capacité du système de refroidissement du véhicule et **en ce que** l'effet de freinage actuel est déterminé à partir du couple de freinage actuel, de la puissance de freinage actuelle, de la pression d'entrée et de sortie du ralentisseur ou du flux de commande, **en ce que** l'état de conduite actuel est déterminé à partir des régimes actuels, par exemple le régime de sortie de la boîte de vitesses, régimes des roues, régimes moteur, régime d'embrayage, la vitesse du véhicule, à partir des variations des régimes ou des vitesses, de la topographie ou de la masse du véhicule en combinaison avec la topographie, et **en ce que** la capacité du système de refroidissement du véhicule est déterminée à partir de la température dans le système de refroidissement, de la variation de la température comme fonction du temps, du régime moteur, de la pression dans le circuit de refroidissement, du rapport engagé, de l'état de l'embrayage ou du régime de la pompe à eau.

2. Procédé selon la revendication 1, **caractérisé en ce que** l'effet de freinage actuel du ralentisseur, l'état de conduite actuel et la capacité du système de refroidissement du véhicule sont pris en considération par une combinaison logique ou à l'aide d'un régulateur à logique floue, afin de pouvoir détecter la nécessité d'une requête de rétrogradage et de déclencher ce rétrogradage.

3. Procédé selon une des revendications 1 ou 2, **caractérisé en ce que** la requête de rétrogradage est signalé au conducteur de manière acoustique, optique ou haptique.

4. Procédé selon une des revendications 1 ou 3, **caractérisé en ce que** la requête de rétrogradage est transmise à un système de changement de vitesses automatisé ou automatique pour déclencher un changement de rapport.
